(19) Europäisches Patentamt
European Patent Office
Office européen des brevets

(11) **EP 1 538 876 A2**

(12) **EUROPEAN PATENT APPLICATION**

(43) Date of publication:
08.06.2005 Bulletin 2005/23

(51) Int Cl.⁷: **H04S 3/00**, H04H 7/00

(21) Application number: 04425909.1

(22) Date of filing: 02.12.2004

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(30) Priority: 03.12.2003 IT rm20030559<br><br>(71) Applicant: **Fondazione Scuola di San Giorgio 30124 Venezia (IT)** | (72) Inventors:<br>• **Stanzial, Domenico**<br>  **44100 Ferrara (FE) (IT)**<br>• **Bonsi, Davide**<br>  **36100 Vicenza (VI) (IT)**<br>• **Schiffrer, Giuliano**<br>  **44100 Ferrara (FE) (IT)**<br><br>(74) Representative: **Perrotta, Luciana, Dr.**<br>  **c/o D. Perrotta & C. S.a.s.,**<br>  **Via Antonio Dionisi, 61**<br>  **00151 Roma (IT)** |

(54) **Equipment for collection and measurement of quadraphonic sound data and metadata as well as a corresponding recording procedure**

(57) Equipment and procedure for collection of acoustic information using the measurement of quadraphonic sound data and metadata. The invention falls under the acoustics field and is applicable in all those cases in which the acoustic analysis of an environment is required, such as, for example, a concert hall, a recording studio or in an environment in which the data relative to natural events is to be measured. It consists of a device for the quadraphonic sound recording, a device for the measurement of quadraphonic propagators, a unit for processing the acoustic data for the indirect measurement of the acoustic metadata. With respect to the prior art, the equipment in question has the advantage of providing an objective assessment of the "quadraphonic high fidelity" during the reproduction phase by using coded "metadata" during the acoustic recording session.

Fig. 1

EP 1 538 876 A2

**Description**

The present invention concerns the equipment and process for the collection (acquisition) of acoustic information using the measurement of quadraphonic sound data and metadata.

The invention falls under the acoustics field and is applicable in all those cases in which the acoustic analysis of an environment is required, such as, for example, a concert hall, a recording studio or in an environment in which the data relative to natural events has to be measured.

With respect to the prior art, the equipment in question has the advantage of providing an objective assessment of the "quadraphonic high fidelity" during the reproduction phase. This is obtained since the data, which are coded during the recording session, are provided with metadata ("data about data") - for which a definition is given below - and enables new standards to be defined for the industrial process of storing and reproduction of the sound, based on fixed objective criteria which define its acoustic fidelity.

In order to make it more easily understandable for an expert in the field, the theoretical part has been described in great detail. Specifically, the metadata in the form of primary energetic indicators of the acoustic field are used:

- as control parameters for any active electro-acoustic sound control devices
- for optimisation of the acoustic communication
- for noise reduction.

The expression "quadraphonic sound" defines the technological process by which the collection of four specific audio signals and their subsequent numerical processing enables identification, in a physically rigorous manner, of the mechanical status of a sound at every moment in time and in an arbitrary point in space in the field of sound.

This identification is made possible by the recording of a particular set of solutions of the sound wave equations. This set, which is also called the 4-momentum of the sound, is formed by four audio tracks which have particular transformation properties, in the acoustic space-time, constituting an entity which in mathematical physics is known by the name of four-vector.

The components of the sound 4-momentum coincide, apart from a proportionality factor which depends on the elastic properties of the medium, with four acoustic magnitudes: the first is known by the name of acoustic pressure and the other three are the ordinary vectorial components of the acoustic speed of the particles of air in the three-dimensional physical space.

The electro-acoustic transduction and the collection and storage of the four signals corresponding to these acoustic magnitudes, for the duration of the sound emission, defines the recording process of the sound event, according to the principles of quadraphonic sound.

The quadraphonic sound process assumes that the physical nature of the sound may be completely described only in terms of pressure-velocity waves which are linked together, in a similar manner as for light which, as is known, may be physically described in terms of electro-magnetic waves. The recording of the four audio tracks corresponding to the sound 4-momentum ("data" of the quadraphonic sound) therefore constitutes the real physical code of the sound which may be subsequently reproduced by suitable "quadraphonic high fidelity systems" designed to resynthesize the recorded sound event, either really (by the electro-acoustic diffusion of the sound in the environment) or virtually (by the acoustic auralization process).

In order to facilitate the process for the quadraphonic re-synthesis of the sound and to objectively assess the "quadraphonic high fidelity" during the reproduction phase, the data coded during the recording session are provided with quadraphonic sound "metadata" ("data about data") which must be collected and measured during the recording session itself. The quadraphonic sound "metadata" are obtained by the collection and storage of the signals corresponding to the spatial propagators of the quad-impulse (response to the quadraphonic sound pulse) of an ideal acoustic system associated to the real one and formed by: a) a point pulse source located in the field near the real source, b) the real environment where the real sound event takes place, c) the same quadraphonic microphone already used for the recording of the data and placed at the same point in the environment. Once it is has been collected and stored, the response to the quadraphonic sound pulse is numerically processed and, from this, indirect measurements are made of a set of primary energetic indicators of the acoustic field associated with the sound event. The response to the quadraphonic sound pulse together with the values of the indicators derived from it defines the quadraphonic sound metadata.

Due to the procedure adopted for the measurement of the quadraphonic sound metadata, the values do not depend either on the spatial extension or the spectral properties of the real sound source but merely on the basic geometrical configuration of the ideal acoustic system associated with the real one and on the spectral properties of the environment itself (in this schematisation, it is clear that ideal instrumental characteristics of operation are attributed to the subsystem constituted by the "point source" and the "quadraphonic microphone"). In this respect, it may be said that the quadraphonic sound metadata contains all the information necessary for the localisation of ideal sources in virtual environments and the modification of the timbre characteristics of the sources with regard to the spectral characteristics of the environment itself (acoustic virtual reality).

As mentioned, the metadata calculated from the response to the quadraphonic sound pulse is obtained in the form of "indicators", i.e. non-dimensional quantities between 0 and 1 obtained from various magnitudes characterising the transport of the acoustic energy in the pressure-velocity fields. These measure the extreme properties of the field: if a certain property corresponds to value 0, the extreme opposite property corresponds to value 1. As explained below, these indicators are derived from various forms of processing of the signals, which correspond to the second order of the instantaneous acoustic magnitudes that define the sound quad-impulse recorded locally in a certain position of the sound environment (ideal listening point) and generated by an ideal acoustic pulse source placed in strategically selected positions to simulate the correct perception of the average spatial characteristics of the sound (origin of the sound, localisation of the source, apparent size of the source, average shape and dimensions of the environment, etc).

The recording procedure is described below to make the invention more easily understandable. The procedure for recording the quadraphonic sound data starts by selecting the position of the quadraphonic microphone inside the acoustic environment in which the recording of any sound is to be made. There may be a wide range of reasons for the selection of the position and the series of operational decisions for the quadraphonic sound recording should be written as a sort of script which is available to the sound engineer who supervises the recording of the sound event. Once it has been placed in a certain position $r_M$, the quadraphonic microphone must function as an ideal probe for the synchronous acoustic-electrical transduction at each moment in time $t$ of the 4 analogue signals of the instantaneous acoustic pressure and the three components of the instantaneous acoustic speed of the air particle for the entire duration of the sound event to be recorded. The 4 signals coded in this way must be stored for the entire duration of the sound event and once they have been archived on suitable physical support for their subsequent use, they represent the 4 tracks $\{s_\alpha(t)\}_{\alpha=0,1,2,3}$ of the sound event recorded according to the principles of quadraphonic sound.

Since the acoustic pressure-velocity field may be derived by linear acoustic theory from the scalar field of the kinetic potential $\phi(\mathbf{r},t)$, the following mathematical representation of the four tracks archived is obtained:

$$s_0(t) = p(r_M,t) = \rho_0 \frac{\partial \phi(r_M,t)}{\partial t}; \{s_i(t)\}_{i=1,2,3} = v(r_M,t) = \nabla \phi(r_M,t) \qquad (1)$$

where $\rho_0$ is the density of air in the absence of acoustic disturbance. The 4 audio tracks represented by expression (1) completely define, from a mechanical point of view, the sound event at the point $\mathbf{r_M}$. The expression

$$\Delta_{Quad} := \{s_\alpha(t)\}_{\alpha=0,1,2,3} \qquad (2)$$

therefore defines the quadraphonic sound data.

1. <u>Linear model of the associated acoustic system and measurement of the quad-impulse</u> (4-momentum propagator)

It is demonstrated on the basis of the linear acoustic theory that, if a single system of coordinates is fixed for the spatial identification of all the acoustic fields to which the present model refers, and a signal of virtual pressure $S_p$ $(\tau)$ is generated at the point $\mathbf{r_s}$ of a free field (in practice, inside an anechoic chamber) by an ideal point source, the sound event "caused" by $S_p$ $(\tau)$ and recordable according to the principles of quadraphonic sound at the point $\mathbf{r_M}$ of any real acoustic environment, is mathematically identified with the 4 signals $\{s_\alpha\}_{\alpha=0,1,2,3} = \{p,v_1,v_2,v_3\}$ obtained by temporal convolution of the "pseudo-anechoic" monophonic signal $S_p$ $(\tau)$ with the quad-impulse $\{g_p,g_{v1},g_{v2},g_{v3}\}$ (the 4-momentum response to the quadraphonic sound pulse) using the following expressions:

$$p(\mathbf{r}_M,\mathbf{r}_S;t) = \int_{-\infty}^{t} g_p(\mathbf{r}_M,\mathbf{r}_S,t-\tau)S_p(\tau)d\tau$$

$$v_1(\mathbf{r}_M,\mathbf{r}_S;t) = \int_{-\infty}^{t} g_{v_1}(\mathbf{r}_M,\mathbf{r}_S,t-\tau)S_p(\tau)d\tau$$

$$v_2(\mathbf{r}_M,\mathbf{r}_S;t) = \int_{-\infty}^{t} g_{v_2}(\mathbf{r}_M,\mathbf{r}_S,t-\tau)S_p(\tau)d\tau \quad\Bigg\}\quad (3)$$

$$v_3(\mathbf{r}_M,\mathbf{r}_S;t) = \int_{-\infty}^{t} g_{v_3}(\mathbf{r}_M,\mathbf{r}_S,t-\tau)S_p(\tau)d\tau$$

The particular expression $\Gamma_{Quad} = \{g_p, g_{v1}, g_{v2}, g_{v3}\}$ which determines the convolution process (3) is formed by 4 sound signals corresponding to the 4 "pulse responses", of which the first, $g_p$, is the acoustic pressure and the remaining three, $g_{v1}, g_{v2}, g_{v3}$, are the three components of the acoustic velocity. The four responses are the effect (sound event) received at the point $\mathbf{r}_M$ as a result of a pulse type excitation (e.g. an ideal "gun shot") which is mathematically represented by a space-time Dirac delta function: $\delta(\mathbf{r}_S, t_0)$. The Dirac delta function is the particular mathematical form which must be attributed to the acoustic pressure signal $S_p(\tau)$ generated by the virtual point source placed at the point $\mathbf{r}_S$ at the specific time to when the shot occurs.

Despite the particular form which is often generated by experimental techniques that are apparently very different from one another, $\Gamma_{Quad}$ is still a sound event and after its processing it will be archived with the same procedure given for the quadraphonic data obtaining the expression:

$$\{s\alpha\,(t)_{\alpha=0,1,2,3} = \{g_p, g_{v1}, g_{v2}, g_{v3}\}$$

Since, in the procedure described here, $\Gamma_{Quad}$ is measured in the same position $\mathbf{r}_M$ and by the same microphone used for the quadraphonic sound recording session, it constitutes the four-dimensional propagator of the acoustic field associated with the quadraphonic sound recording process.

The quadraphonic propagator $\Gamma_{Quad}$ obtained as described above constitutes one of the elements of $M_{Quad}$ of the quadraphonic sound metadata which will be completely defined in the following point.

2. Definition and measurement of the acoustic field primary energetic indicators

We shall hereby define the remaining elements of $M_{Quad}$. For this purpose, we introduce the following effective statistical average $\overline{\Gamma_{Quad}}$ corresponding to the quadraphonic propagator:

$$\overline{\Gamma_{Quad}} := \{\Gamma_P, \Gamma_V\} \equiv \left\{ \sqrt{\int_0^{\infty} g_p^2(t)\,dt}, \sqrt{\int_0^{\infty}\left[ g_{v_1}^2(t) + g_{v_2}^2(t) + g_{v_3}^2(t) \right]dt} \right\}$$

$$(4)$$

where the integration extreme 0 refers to the time to when the shot occurs at the point $\mathbf{r}_S$ (cause) whilst $\Gamma_{Quad} \equiv \{g_p, g_{v1}, g_{v2}, g_{v3}\}$ is measured at $\mathbf{r}_M$ (effect). Expression (4) immediately provides the two extremely important factors of normalisation in amplitude and phase of the energetic transport which are defined, respectively, as follows:

$$\Gamma_A := \frac{1}{2}\left[\rho_0 c\Gamma_V^2 + (\rho_0 c)^{-1}\Gamma_P^2\right] \quad\quad (5)$$

$$\Gamma_F := \Gamma_V\Gamma_P \quad\quad (6)$$

As known, the physical magnitude which best interprets the concept of energetic transport which occurs at a point of the field of sound is the acoustic intensity vector. The module of this vector, which is obtained from the appropriate statistical mean of the elements of the quadraphonic propagator $\Gamma_{Quad}$, is written as follows:

$$J := \sqrt{J_1^2 + J_2^2 + J_3^2}; \quad J_i = \int_0^\infty g_p(t) g_{v_i}(t) dt; \quad i = 1, 2, 3 \qquad (7)$$

and its normalised expression obtained in accordance with the factors of amplitude (5) and phase (6), defines respectively the two fundamental primary energetic indicators $\eta$, $\xi$ of the quadraphonic sound. It should be noted that since $\Gamma_A \geq \Gamma_F$, $0 \leq \eta \leq \xi \leq 1$ is always obtained. The remaining 5 primary energetic indicators of the quadraphonic sound are derived from these two fundamental indicators, for a total of 7. Their explicit expressions are as follows:

$$\eta := \frac{J}{\Gamma_A}; \quad \xi := \frac{J}{\Gamma_F}; \quad \sigma := \frac{\Gamma_F}{\Gamma_A}; \qquad (8)$$

$$\mu := \sqrt{1 - \eta^2}; \quad \kappa := \sqrt{1 - \xi^2}; \quad \zeta := \sigma\sqrt{1 - \xi^2}; \quad \tau := \sigma\sqrt{\frac{1 - \xi^2}{1 - \eta^2}}. \qquad (9)$$

$M_{Quad}$ of the quadraphonic sound metadata may now be defined completely:

$$M_{Quad} := \{\Gamma_{Quad}, \sigma, \eta, \xi, \mu, \kappa, \zeta, \tau\} \qquad (10)$$

These may all be measured indirectly by means of suitable numerical processing of the signals corresponding to the quadraphonic propagator $\Gamma_{Quad}$ indicated in the expressions (4), (5), (6), (7), (8), and (9).

The combination of the data (2) and the metadata (10) defines the new set $\Sigma_{Quad}$ of the quadraphonic sound recording session:

$$\Sigma_{Quad} := \{\Delta_{Quad}, M_{Quad}\} \qquad (11)$$

The invention is now described in an illustrative and not limitative manner in accordance with the version currently preferred by the inventor and the attached drawings:

Fig. 1 - Schematic representation of the device for recording the data $\Delta_{Quad} := \{s_\alpha(t)\}_{\alpha=0,1,2,3}$

Fig. 2 - Schematic representation of the device for measurement of quadraphonic propagator $\Gamma_{Quad} \equiv \{g_p, g_{v1}, g_{v2}, g_{v3}\}$

Fig. 3 - Block diagram showing the processing of the quadraphonic metadata $M_{Quad} := \{\Gamma_{Quad}, \sigma, \eta, \xi, \mu, \kappa, \zeta, \tau\}$

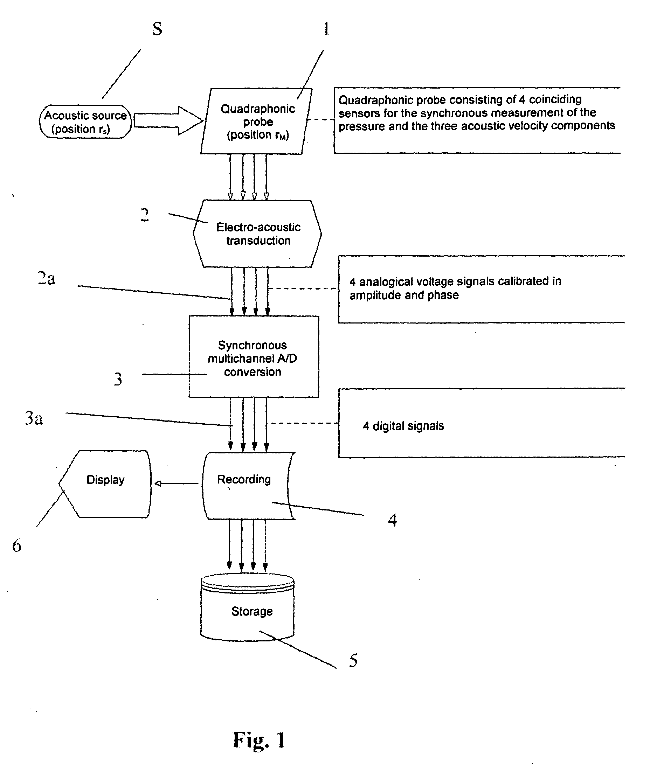

The device for the recording of the quadraphonic data $\Delta_{Quad} := \{s_\alpha(t)\}_{\alpha=0,1,2,3}$ shown in Fig. 1 is constituted by a quadraphonic probe 1; an electro-acoustic transducer 2; a synchronous multichannel A/D converter 3; a data recording element 4; a data storage element 5; a data visualisation element 6. $S$ indicates the acoustic source (position $r_s$); 2a indicates four analogical signals and 3a indicates four digital signals.

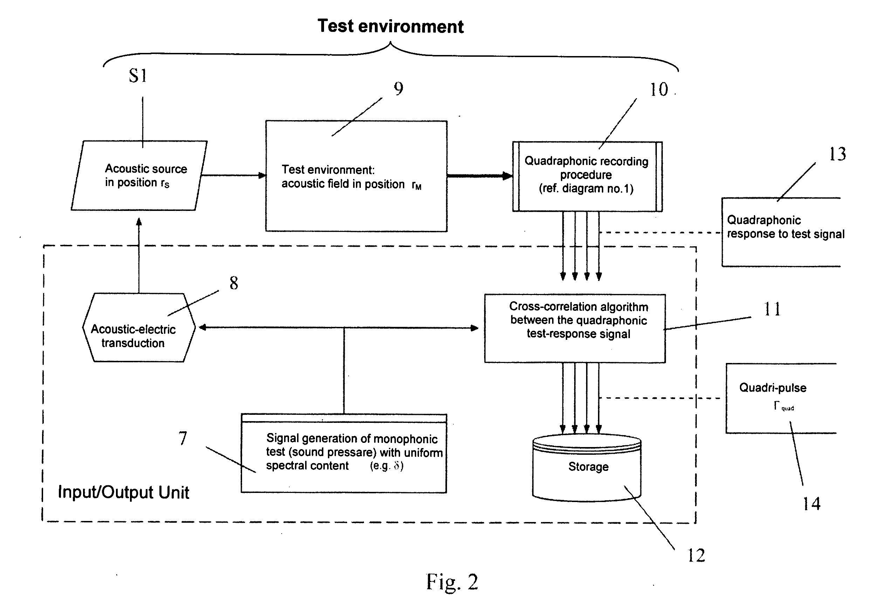

The device for the measurement of the quadraphonic propagator $\Gamma_{Quad} \equiv \{g_p, g_{v1}, g_{v2}g_{v3}\}$ shown in Fig. 2 is constituted by an element for the generation of the monophonic test signal 7 (sound pressure) with uniform spectral content; an acoustic-electrical transducer 8; an acoustic source in $r_s$ S1; a test environment: acoustic field in $r_M$ 9; a quadraphonic recording device 10; a processing system 11 which carries out the cross-correlation algorithm between the quadraphonic test-response signals; a storage element 12; 13 indicates the quadraphonic response to the test signal and 14 indicates the quadri-pulse $\Gamma_{Quad}$.

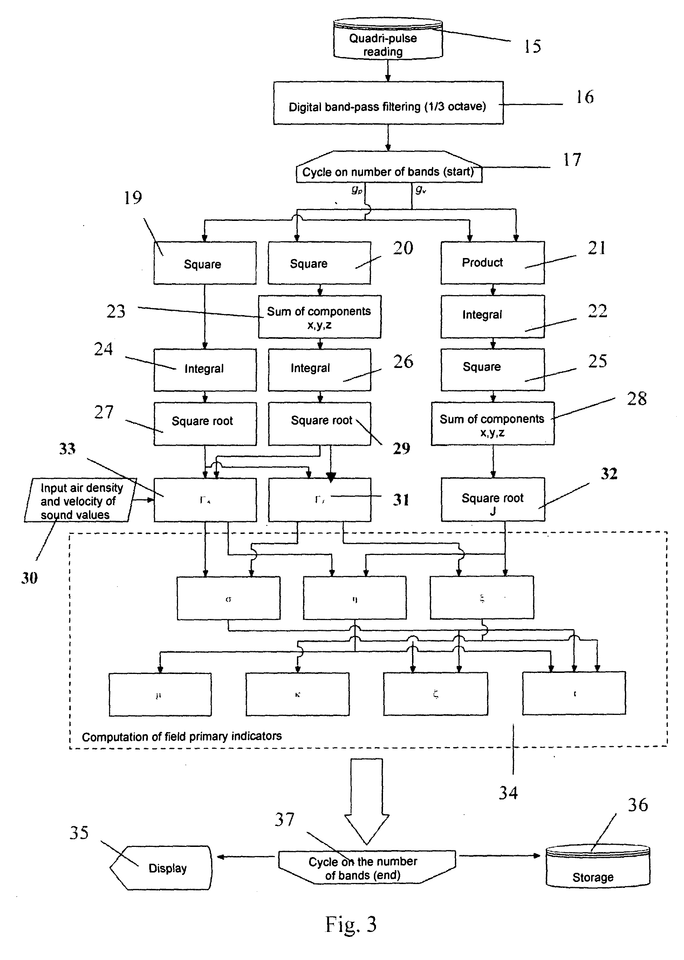

The block diagram in Fig. 3 relative to the processing (indirect measurement) of the quadraphonic metadata is constituted by:

15 quad-impulse reading block $\Gamma_{Quad} \equiv g_p, g_{v1}g, g_{v2}, g_{v3},\}$ ;
16 digital band-pass filtering block (1/3 octave);
17 block from which the cycle is obtained regarding the number of bands which it produces at the outputs the magnitudes $g_p$ and $g_v$;
19, 20 blocks which produce the squares of $g_p$ and $g_v$ respectively;
21 block which gives the product $g_p g_v$;
24 block which has as input the output of block 19 and which produces the integral of the square of gp;
23 block which produces as output the sum of the squares of the components of $g_v$;
22 block which produces as output the integral of the product $g_p g_{vi}$ ($J_i$);
25 block which produces as output the square of the integral of the components $J_i$;
26 block which produces as output the sum of the squares of the components $g_{vi}$;
28 block which produces as output the sum of the squares of the components $J_i$;
27 block which produces as output the square root of the integral of the square of $g_p$ ($\Gamma_p$);
29 block which produces as output the square root of the integral of the sum of the squares of the components of $g_v$ ($\Gamma_v$);
30 a data input block the output of which gives the speed of sound and air density values;
33 block which produces as output the indirect measurement of $\Gamma_A$ by processing the data at the 3 inputs relative to the density and speed of sound at $\Gamma_p$ and $\Gamma_v$, respectively;
31 block which produces as output the indirect measurement of $\Gamma_F$;
32 block which produces the square root of the sum of the squares of Ji(J);
34 block which produces the indirect measurement of the parameters $\sigma$, $\eta$, $\xi$, $\mu$, $\kappa$, $\zeta$ and $\tau$ on the basis of the processing of the indirect measurements of $\Gamma_p$, $\Gamma_v$ and J carried out by the three blocks 33, 31, 32;
35 block for the visualisation of the measurements (e.g. a display);
36 block for the storage of the measured data;
37 block which carries out the cycle on the number of bands.

### Claims

1. Equipment for the recording and measurement of quadraphonic sound data and metadata, **characterised by** the fact of being constituted by a device for quadraphonic sound recording, a device for the measurement of quadraphonic propagators, and a unit for the processing of acoustic data for the indirect measurement of acoustic metadata.

2. Equipment for the recording and measurement of quadraphonic sound data and metadata as per Claim 1, **characterised by** the fact that the device for the recording of the acoustic data is constituted by a quadraphonic probe (1); an electro-acoustic transducer (2); a synchronous multichannel A/D converter (3); a data recording element (4); a data storage element (5); a data visualisation element (6) and an acoustic source S.

3. Equipment for the recording and measurement of quadraphonic sound data and metadata as per Claims 1 and 2, **characterised by** the fact that the device for the measurement of the quadraphonic propagators is constituted by an acoustic source S 1 and by an element for the generation of the monophonic test signal (sound pressure) with uniform spectral content (7); an acoustic-electrical transducer (8); a test environment: acoustic field in $r_M$ (9) generated by the source S1; a quadraphonic recording device (10); a processing system which carries out the cross-correlation algorithm between the quadraphonic test-response signals (11); a storage element (12).

4. Equipment for the recording and measurement of quadraphonic sound data and metadata as per Claims 1, 2 and 3, **characterised by** the fact that the measurements carried out are processes with a suitable program to obtain the indirect measurements of the acoustic metadata.

5. Equipment for the recording and measurement of quadraphonic sound data and metadata as per Claims 1, 2, 3 and 4, **characterised by** the fact that the acoustic data may be used in the active electro-acoustic control of the sound, to optimise the acoustic communication and for the quadraphonic auralisation of the sound both in real and

virtual environments.

Fig. 1

**Test environment**

S1

Acoustic source in position $r_S$

Test environment: acoustic field in position $r_M$ — 9

Quadraphonic recording procedure (ref. diagram no. 1) — 10

Acoustic-electric transduction — 8

Signal generation of monophonic test (sound pressure) with uniform spectral content (e.g. $\delta$) — 7

**Input/Output Unit**

Cross-correlation algorithm between the quadraphonic test-response signal — 11

Storage — 12

Quadri-pulse $r_{quad}$ — 14

Quadraphonic response to test signal — 13

Fig. 2

Fig. 3